(19) Europäisches Patentamt
European Patent Office
Office européen des brevets

(11) **EP 4 224 399 A1**

(12) **EUROPEAN PATENT APPLICATION**

(43) Date of publication:
**09.08.2023 Bulletin 2023/32**

(21) Application number: **23154896.7**

(22) Date of filing: **03.02.2023**

(51) International Patent Classification (IPC):
***G06Q 30/0283*** (2023.01)

(52) Cooperative Patent Classification (CPC):
**G06Q 30/0201; G06Q 30/0206; G06Q 30/0283**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.02.2022 IN 202221006165**

(71) Applicant: **Tata Consultancy Services Limited
Maharashtra (IN)**

(72) Inventors:
• **VASUDEVAN, BAGYA LAKSHMI
600097 Chennai - Tamil Nadu (IN)**
• **GUNASEKAR, LAVANYA
603103 Chennai - Tamil Nadu (IN)**

(74) Representative: **Goddar, Heinz J.
Boehmert & Boehmert
Anwaltspartnerschaft mbB
Pettenkoferstrasse 22
80336 München (DE)**

(54) **METHODS AND SYSTEMS FOR TEXT-BASED TARGET PRODUCTS MATCHING**

(57) This disclosure relates generally to methods and systems for text-based target products matching to keep competitive price for increasing customer traffic. The conventional image similarity or image matching based approaches require appropriate configurations and infrastructure, quality images and more computational power. Also, the configurations and infrastructure may not be scalable for new products and may not be suitable for all retail industry types. The present disclosure uses only the text-based data inputs of the retailer and the competitor. The present disclosure first generates a data corpus from the data inputs of the retailer and the competitor. Then, context tokens are identified using a natural language-based technique and a cogent matrix is formed based on the data inputs of the retailer and the competitor, the context tokens, and using a cogent score calculation function, to get the matching results.

FIG. 1

EP 4 224 399 A1

**Description**

CROSS-REFERENCE TO RELATED APPLICATIONS AND PRIORITY

The present application claims priority to Indian application no. 202221006165, filed on February 04, 2022.

TECHNICAL FIELD

The disclosure herein generally relates to the field of retail industry, and, more particularly, to methods and systems for text-based target products matching to keep competitive price for increasing customer traffic.

BACKGROUND

Most of the customers tend to compare pricing of a product from several retail stores for best pricing and best deals, before purchasing the product. Hence competitive pricing is an approach that helps any retailers such as supermarkets, retail shops, retail stores, and so, to increase the customer traffic by optimizing the prices using the competitor product pricing and offerings data. The competitive pricing significantly improves the purchases and in turn boost the revenue of the retailers. For making the competitive pricing of the products, analyzing the competitor products pricing and offerings data plays a critical role especially in present e-commerce world. Further, analyzing the competitor products pricing and offerings data, will help the retailers to: (i) sustain and enhance their business strategies, (ii) understand the gaps in the market and to keep up customer attention rather than customer attrition, and (iii) to keep competitive pricing and promotions.

Most of the conventional techniques use image similarity or image matching based approaches for comparing the competitor products pricing and offerings data, to determine competitive pricing. However, the image similarity or image matching based approaches require appropriate configurations and infrastructure, quality images and more computational power. Also, the configurations and infrastructure need to be scalable for new products and enriched data information, which may incur additional cost. Further, the image similarity or image matching based approaches may not be suitable and limited to few product types. For example, if the product comes in different variants, such as color, weight, size, shape, and so on, then extracting these key attributes from the images is quite challenging especially with low quality images, resulting to inaccurate product matching results. Conventional machine learning (ML) or deep learning (DL) based models for competitor product matching requires large amount of labelling data and requires frequent training whenever of the new products in place. Further, one ML or DL model may not fit for all retailors of different product types.

SUMMARY

Embodiments of the present disclosure present technological improvements as solutions to one or more of the above-mentioned technical problems recognized by the inventors in conventional systems.

In an aspect, a processor-implemented method for text-based target products matching. The method including the steps of: receiving (i) product details of each source product of one or more source products, and (ii) product details of each target product of a plurality of target products; generating (i) a source product corpus from the product details of each source product of the one or more source products, and (ii) a target product corpus from the product details of each target product of the plurality of target products; combining the source product corpus and the target product corpus, to obtain a combined product corpus, wherein the combined product corpus comprises a plurality of combined product corpus elements; obtaining a product corpus dictionary, from the combined product corpus, using a natural language processing technique, wherein the product corpus dictionary comprises a plurality of product context tokens; identifying one or more unique product context tokens out of the plurality of product context tokens present in the product corpus dictionary; determining a token density of each unique product context token of the one or more unique product context tokens, using the product corpus dictionary; determining a cogent score for each unique product context token of the one or more unique product context tokens, using a cogent score calculation function; building a product cogent matrix having: (i) the plurality of combined product corpus elements of the combined product corpus, as rows, (ii) the one or more unique product context tokens, as columns, and (iii) the cogent score for each unique product context token of the one or more unique product context tokens, as matrix values; determining a similarity matrix using: (i) the product cogent matrix, and (ii) a transpose of the product cogent matrix; and determining one or more target products that are matching for each source product of one or more source products, using the similarity matrix.

In another aspect, a system for text-based target products matching is provided. The system includes: a memory storing instructions; one or more Input/Output (I/O) interfaces; and one or more hardware processors coupled to the memory via the one or more I/O interfaces, wherein the one or more hardware processors are configured by the instructions to: receive (i) product details of each source product of one or more source products, and (ii) the product details of each target product of a plurality of target products; generate (i) a source product corpus from the product details of each source product of the one or more source products, and (ii) a target product corpus from the product details of each target product of the plurality of target products; combine the source product corpus and the target product corpus, to obtain a combined product corpus, wherein the combined product corpus comprises a plurality of combined product corpus elements; obtain a product corpus dictionary, from the combined product corpus, using a natural language processing technique, wherein the product corpus dictionary comprises a plurality of product context tokens; identify one or more unique product context tokens out of the plurality of product context tokens present in the product corpus dictionary; determine a token density of each unique product context token of the one or more unique product context tokens, using the product corpus dictionary; determine a cogent score for each unique product context token of the one or more unique product context tokens, using a cogent score calculation function; build a product cogent matrix having: (i) the plurality of combined product corpus elements of the combined product corpus, as rows, (ii) the one or more unique product context tokens, as columns, and (iii) the cogent score for each unique product context token of the one or more unique product context tokens, as matrix values; determine a similarity matrix using: (i) the product cogent matrix, and (ii) a transpose of the product cogent matrix; and determine one or more target products that are matching for each source product of one or more source products, using the similarity matrix.

In yet another aspect, there is provided one or more non-transitory machine-readable information storage mediums comprising one or more instructions which when executed by one or more hardware processors cause: receiving (i) product details of each source product of one or more source products, and (ii) the product details of each target product of a plurality of target products; generating (i) a source product corpus from the product details of each source product of the one or more source products, and (ii) a target product corpus from the product details of each target product of the plurality of target products; combining the source product corpus and the target product corpus, to obtain a combined product corpus, wherein the combined product corpus comprises a plurality of combined product corpus elements; obtaining a product corpus dictionary, from the combined product corpus, using a natural language processing technique, wherein the product corpus dictionary comprises a plurality of product context tokens; identifying one or more unique product context tokens out of the plurality of product context tokens present in the product corpus dictionary; determining a token density of each unique product context token of the one or more unique product context tokens, using the product corpus dictionary; determining a cogent score for each unique product context token of the one or more unique product context tokens, using a cogent score calculation function; building a product cogent matrix having: (i) the plurality of combined product corpus elements of the combined product corpus, as rows, (ii) the one or more unique product context tokens, as columns, and (iii) the cogent score for each unique product context token of the one or more unique product context tokens, as matrix values; determining a similarity matrix using: (i) the product cogent matrix, and (ii) a transpose of the product cogent matrix; and determining one or more target products that are matching for each source product of one or more source products, using the similarity matrix.

In an embodiment, the product details of each source product comprise at least one of: a source product name, a source product brand, a source product price, a source product hierarchy, and source product variant details; and the product details of each target product comprise at least one of: a target product name, a target product brand, a target product price, a target product hierarchy, and target product variant details.

In an embodiment, the source product corpus from the product details of each source product of the one or more source products, is generated by: obtaining one or more source product features for each source product, from the product details associated with each source product; combining the one or more source product features for each source product, to obtain an input source product feature vector for each source product; and combining the input source product feature vector for each source product of the one or more source products, to generate the source product corpus.

In an embodiment, the target product corpus from the product details of each target product of the plurality of target products, is generated by: obtaining one or more target product features for each target product, from the product details associated with each target product; combining the one or more target product features for each target product, to obtain an input target product feature vector for each target product; and combining the input target product feature vector for each source product of the plurality of target products, to generate the target product corpus.

In an embodiment, the product corpus dictionary having the plurality of product context tokens, from the combined product corpus, using the natural language processing technique, is obtained by: extracting one or more product context tokens for each combined product corpus element of the plurality of combined product corpus elements, using the natural language processing technique; combining the one or more product context tokens for the plurality of combined product corpus elements, to obtain the plurality of product context tokens; and concatenating the plurality of product context tokens, to obtain the product corpus dictionary.

In an embodiment, the cogent score calculation function is made up of: (i) the token density of each unique product context token, and (ii) a number of the plurality of product context tokens present in the product corpus dictionary.

In an embodiment, the cogent score calculation function is mathematically expressed according to a relation:

$$Cogent\ score = 1 - \log(\frac{w(n)}{sc})$$

wherein w(n) is the token density of each unique product context token and sc is the number of the plurality of product context tokens present in the product corpus dictionary.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for text-based target products matching, in accordance with some embodiments of the present disclosure.
FIG. 2A and FIG. 2B illustrates exemplary flow diagrams of a processor-implemented method for text-based target products matching, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present disclosure herein provides methods and systems for text-based target products matching, that addresses the technical problems by using only the text-based data inputs of a retailer and a competitor. The present disclosure first generates a data corpus from the data inputs of the retailer and the competitor. Then, context tokens (keywords) are identified using a natural language-based technique and a data dictionary is formed. Further, a cogent matrix is formed based on the data inputs of the retailer and the competitor, the context tokens, and using a cogent score calculation function that defines a cogent value for each context token. Lastly, matching results having the competitor data for the retailor data are obtained using the cogent matrix.

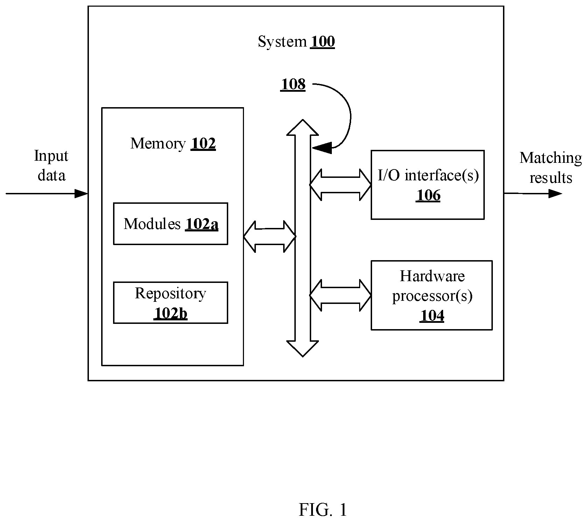

Referring now to the drawings, and more particularly to FIG. 1 through FIG. 2B, where similar reference characters denote corresponding features consistently throughout the figures, there are shown preferred embodiments and these embodiments are described in the context of the following exemplary systems and/or methods.

FIG. 1 is an exemplary block diagram of a system 100 for text-based target products matching, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

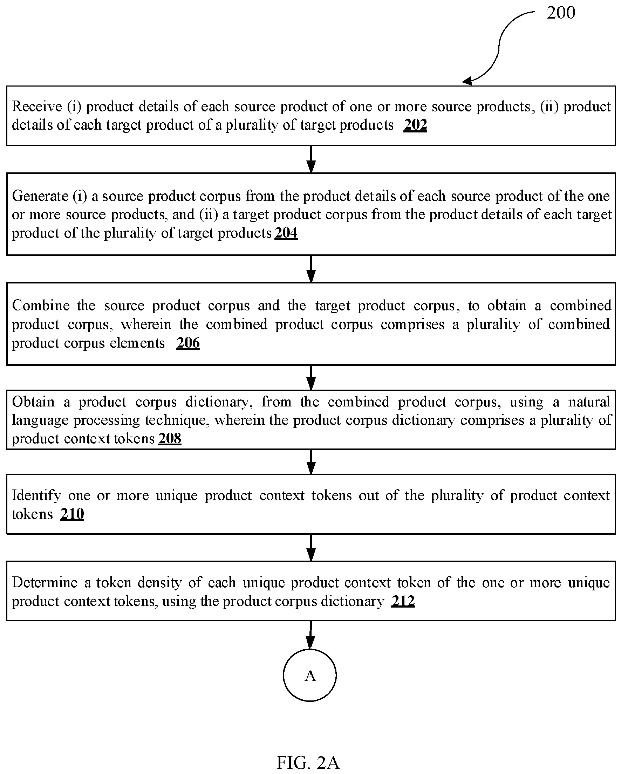

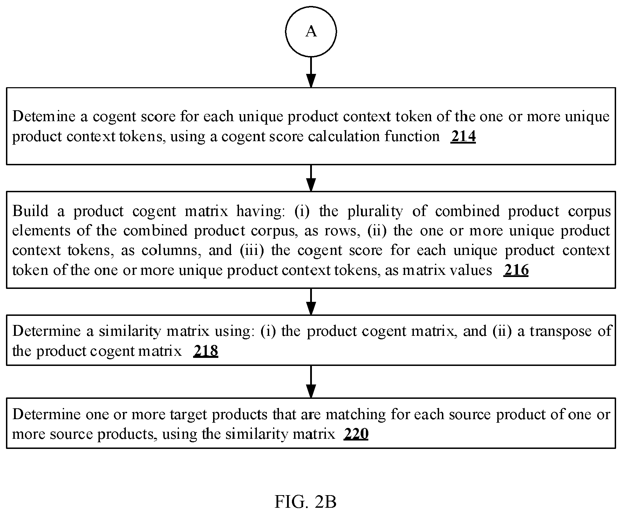

Referring to FIG. 2A and FIG. 2B, components and functionalities of the system 100 are described in accordance with an example embodiment of the present disclosure. For example, FIG. 2A and FIG. 2B illustrates exemplary flow diagrams of a processor-implemented method 200 for text-based target products matching, in accordance with some embodiments of the present disclosure. Although steps of the method 200 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method 200, the one or more hardware processors 104 of the system 100 are configured to receive product details of each source product of one or more source products, the product details of each target product of a plurality of target products. In an embodiment, the one or more source products are associated with the retailor or a source retailor where the competitive price to be set for each of the one or more source products, based on the competitor. In an embodiment, the plurality of target products is associated with the competitor retailor where the plurality of target products is used for matching with the one or more source products while determining the competitive price. The competitor retailor may be the competitor to the source retailor or the same competitor retailor that present in a different geographical region.

The product details of each source product comprise at least one of: a source product name, a source product brand, a source product price, a source product hierarchy, and source product variant details. The source product name refers to the name of the source product. The source product brand refers to the brand name of the source product. The source product hierarchy refers to the broad category or hierarchy of the source product. For example, the source product 'milk' may be classified under the source product hierarchy 'dairy products', the source product 'wooden chair' may be classified under the source product hierarchy 'wooden furniture', and so on. The source product variant details refer to the variant details of the source product such as color, weight, size, shape, and so on. For example, the source product 'milk' may be available in different weights such as 0.25 litre, 0.5 litre, 1 litre, and so on and each weight variation may be available in different color and shape packings.

The product details of each target product comprise at least one of: a target product name, a target product brand, a target product price, a target product hierarchy, and target product variant details. The target product name refers to the name of the target product. The target product brand refers to the brand name of the target product. The target product hierarchy refers to the broad category or hierarchy of the target product. For example, the target product 'milk' may be classified under the target product hierarchy 'dairy', the target product 'wooden chair' may be classified under the target product hierarchy 'furniture', and so on. The target product variant details refer to the variant details of the target product such as color, weight, size, shape, and so on. For example, the target product 'milk' may be available in different weights such as 0.25 litre, 0.5 litre, 1 litre, and so on and each weight variation may be available in different color and shape packings.

Consider an example of an exemplary source retailor 'X' and an exemplary competitor retailor 'Y'. Table 1 shows the exemplary source retailor 'X' having the product details of two exemplary source products namely: 'Nightstand' and 'Chairside End Table with USB ports and outlets'. Table 2 shows the competitor retailor 'Y' having the product details of five exemplary target products namely: 'Nightstand', 'Night-stand', 'Dining Table', 'End Table', and 'Chairside End Table with USB ports and outlets'. Note that some of the product details may not be available and some of the product details may not be relevant. The objective of the invention is to get the completely matching or closely matching target products if present in the exemplary competitor retailor 'Y' for each source product in the exemplary source retailor 'X'. The same example is used to explain the remaining steps of the invention still the objective of the invention is achieved.

Table 1

| Source Product Name | Source Product Brand | Source Product Hierarchy | Source Product Variant Details |
|---|---|---|---|
| Nightstand | ABCD | Furniture > Bedroom Furniture > Nightstands | Antique Style - Rectangular- Warm Brown |
| Chairside End Table with USB ports and outlets | XYZ | Furniture > Living Room Furniture > Tables > End Tables | Brown |

Table 2

| Target Product Name | Target Product Brand | Target Product Hierarchy | Target Product Variant Details |
|---|---|---|---|
| Nightstand | ABCD | Furniture > Bedroom Furniture > Nightstand | - |
| Night-stand | KLM | Furniture > Bedroom Furniture > Nightstand | Rustic Farmhouse Style - Whitewash |
| Dining Table | ABCD | Furniture > Kitchen & Dining Room Furniture > Dining Tables and Sets | |
| End Table | PQRS | Furniture > Living Room Furniture > End and Side Tables | Two-tone |
| Chairside End Table with USB ports and outlets | XYZ | Furniture > Living Room Furniture > End and Side Tables | |

At step 204 of the method 200, the one or more hardware processors 104 of the system 100 are configured to generate a source product corpus and a target product corpus. The source product corpus is generated using the product details of each source product of the one or more source products received at step 202 of the method 200. Similarly, the target product corpus is generated using the product details of each target product of the plurality of target products received at step 202 of the method 200. In an embodiment, a data schema model may be used to generate the source product corpus and the target product corpus.

The source product corpus is generated by first obtaining one or more source product features for each source product, from the product details associated with each source product. Each source product feature refers to the product detail of each source product and the one or more source product features are obtained from the product details of the associated source product. Next, the one or more source product features for each source product, are combined to obtain an input source product feature vector for each source product. Lastly, the input source product feature vectors obtained from the one or more source products, are combined to generate the source product corpus, using the data schema model.

Similarly, the target product corpus is generated by first obtaining one or more target product features for each target product, from the product details associated with each target product. Each target product feature refers to the product detail of each target product and the one or more target product features are obtained from the product details of the associated target product. Next, the one or more target product features for each source product, obtained are combined to obtain an input target product feature vector for each target product. Lastly, the input target product feature vectors obtained from the plurality of target products, are combined to generate the target product corpus using the data schema model.

An exemplary source product corpus for the exemplary source retailor 'X' having the product details of two exemplary source products as shown in table. 1 mentioned at step 202 of the method 200, look like the below:
Exemplary source product corpus = "['Furniture > Bedroom Furniture > Nightstands, ABCD Nightstand Antique Style - Rectangular - Warm Brown', 'Furniture > Living Room Furniture > Tables > End Tables, XYZ Chairside End Table with USB ports and outlets Brown', .................]".

An exemplary target product corpus for the exemplary competitor retailer 'X' having the product details of five exemplary target products as shown in table. 2 mentioned at step 202 of the method 200, look like the below:
Exemplary target product corpus = "['Furniture > Bedroom Furniture > Nightstand, ABCD Nightstand', 'Furniture > Bedroom Furniture > Nightstand KLM Nightstand Rustic Farmhouse Style - Whitewash', 'Furniture > Kitchen & Dining Room Furniture > Dining Tables and Sets, ABCD Dining Table', ...................]".

At step 206 of the method 200, the one or more hardware processors 104 of the system 100 are configured to combine the source product corpus and the target product corpus, generated at step 204 of the method 200, to obtain a combined product corpus. The combined product corpus includes a plurality of combined product corpus elements. Each combined product corpus element refers to either the product details of each source product obtained in the form of the input source product feature vector at step 204 of the method 200, or the product details of each target product obtained in the form of the input target product feature vector at step 204 of the method 200. Overall, the plurality of combined product corpus elements refers to the input source product feature vectors obtained from the one or more source products and the input target product feature vectors obtained from the plurality of target products. In other words, the number of the plurality of combined product corpus elements is the summation of number of the one or more source products and the number of the plurality of target products.

An exemplary combined product corpus for the exemplary source product corpus and the exemplary target product corpus generated at step 204 of the method 200, look like the below:
Exemplary combined product corpus = '['Furniture > Bedroom Furniture > Nightstands, ABCD Nightstand Antique Style - Rectangular - Warm Brown', 'Furniture > Living Room Furniture > Tables > End Tables, XYZ Chairside End Table with USB ports and outlets Brown', ................., 'Furniture > Bedroom Furniture > Nightstand, ABCD Nightstand', 'Furniture > Bedroom Furniture > Nightstand KLM Nightstand Rustic Farmhouse Style - Whitewash', 'Furniture > Kitchen & Dining Room Furniture > Dining Tables and Sets, ABCD Dining Table', ...................]'.

At step 208 of the method 200, the one or more hardware processors 104 of the system 100 are configured to obtain a product corpus dictionary, from the combined product corpus, using a natural language processing technique. The product corpus dictionary includes a plurality of product context tokens. The product corpus dictionary obtained first by extracting one or more product context tokens for each combined product corpus element of the plurality of combined product corpus elements, using the natural language processing technique. The natural language processing technique helps to eliminate the noises such as stop words, punctuations, symbols etc., present in each combined product corpus element and identifies the context tokens such as common nouns, proper nouns, adjective tags, etc., present in each combined product corpus element. Hence the one or more product context tokens for each combined product corpus element, refers to the keywords that are the common nouns, proper nouns, adjective tags, etc., present in the corresponding combined product corpus element.

Next, the one or more product context tokens extracted for the plurality of combined product corpus elements, are combined to obtain the plurality of product context tokens. Lastly, the plurality of product context tokens, are concatenated to obtain the product corpus dictionary having the plurality of product context tokens.

An exemplary product corpus dictionary for the exemplary combined product corpus mentioned at step 206 of the method 200 look like the below:

Exemplary product corpus dictionary = [{'furniture', 'bedroom', 'furniture', 'nightstands', ' ABCD', 'nightstand', 'antique', 'style', 'rectangular', 'warm', 'brown'}, {'furniture', 'living', 'room', 'furniture', 'tables', 'end', 'tables', ' XYZ', 'chairside', 'end', 'table', 'USB', 'ports', 'outlets', 'brown'}................., {'furniture', 'bedroom', 'furniture', 'nightstand', ' ABCD', 'nightstand'}, {'furniture', 'bedroom', 'furniture', 'nightstand', 'KLM', 'nightstand', 'rustic', 'farmhouse', 'style', 'whitewash'}, ...................].

At step 210 of the method 200, the one or more hardware processors 104 of the system 100 are configured to identify one or more unique product context tokens out of the plurality of product context tokens present in the product corpus dictionary obtained at step 208 of the method 200. Some of the product context tokens present in the product corpus dictionary may be repetitive and hence the unique product context tokens are considered as the one or more unique product context tokens.

One or more exemplary unique product context tokens present in the exemplary product corpus dictionary mentioned at step 208 of the method 200, look like the below:

Exemplary unique product context tokens = ['brown', 'furniture', 'rectangle', ' ABCD', 'nightstand', 'antique', 'style', 'bedroom', 'warm', 'live', 'room', 'table', 'end', ' XYZ', 'chairside', 'USB', 'port', 'outlet', 'furniture', 'KLM', 'rustic', 'farmhouse', 'whitewash', ......].

At step 212 of the method 200, the one or more hardware processors 104 of the system 100 are configured to determine a token density of each unique product context token of the one or more unique product context tokens, using the product corpus dictionary. The token density of each unique product context token refers to the number of occurrences of the associated unique product context token in the product corpus dictionary obtained at step 208 of the method 200.

An exemplary token density of the unique product context token 'furniture' from exemplary product corpus dictionary mentioned at step 208 of the method 200, is '16104'. The exemplary token density of the of the unique product context token 'table' from exemplary product corpus dictionary mentioned at step 208 of the method 200, is '5912'. Similarly, the exemplary token density of the unique product context token 'ABCD' from exemplary product corpus dictionary mentioned at step 208 of the method 200, is '126'.

At step 214 of the method 200, the one or more hardware processors 104 of the system 100 are configured to determine a cogent score for each unique product context token of the one or more unique product context tokens obtained at step 210 of the method 200. A cogent score calculation function is used to determine the cogent score for each unique product context token. The cogent score calculation function used to determine the cogent score for each unique product context token is made up of: (i) the token density of the unique product context token, and (ii) a number of the plurality of product context tokens present in the product corpus dictionary obtained at step 208 of the method 200.

The cogent score calculation function to determine the cogent score for each unique product context token, is mathematically expressed according to a below relation:

$$Cogent\ score = 1 - \log\left[\frac{w(n)}{sc}\right]$$

wherein w(n) is the token density of each unique product context token and sc is the number of the plurality of product context tokens present in the product corpus dictionary.

If an exemplary number of the plurality of product context tokens present in the exemplary product corpus dictionary mentioned at step 208 of the method 200 and considering the exemplary token density at step 212 of the method 200, the cogent score for the unique product context token:

$$\text{'furniture'} = 1\text{-}log10(16104/150584) = 1.97084$$

$$\text{'table'} = 1\text{-}log10(5912/150584) = 2.40604$$

$$\text{'ABCD'} = 1\text{-}log10(126/150584) = 4.0774$$

At step 216 of the method 200, the one or more hardware processors 104 of the system 100 are configured to build a product cogent matrix. The plurality of combined product corpus elements of the combined product corpus, obtained at step 206 of the method 200 are presented as rows, in the product cogent matrix. The one or more unique product context tokens obtained at step 210 of the method 200 are presented, as columns, in the product cogent matrix. The cogent score for each unique product context token of the one or more unique product context tokens, is presented as matrix value against each cell. The cogent score is present in the corresponding cell as a matric value, only if the associated unique product context token is present in the corresponding combined product corpus element in the corresponding row. If any unique product context token is not present in the combined product corpus element, then the cogent score for the corresponding cell value with '0'.

Table 3 shows an exemplary product cogent matrix for the exemplary data present in the above steps:

Table 3

|  | furniture | ABCD | table | ... |
|---|---|---|---|---|
| ['Furniture > Bedroom Furniture > Nightstands, ABCD Nightstand Antique Style - Rectangular - Warm Brown', | 1.97084 | 4.0774 | 0 | ... |
| 'Furniture > Living Room Furniture > Tables > End Tables, XYZ Chairside End Table with USB ports and outlets Brown', | 1.97084 | 0 | 2.40604 | ... |
| .... |  |  |  | ... |
| 'Furniture > Bedroom Furniture > Nightstand, ABCD Nightstand', | 1.97084 | 4.0774 | 0 | ... |
| ...... | ... | ... | ... | ... |

At step 218 of the method 200, the one or more hardware processors 104 of the system 100 are configured to determine a similarity matrix using: (i) the product cogent matrix obtained at step 216 of the method 200 , and (ii) a transpose of the product cogent matrix. More particularly, the similarity matrix is determined by multiplying the product cogent matrix with the transpose of the product cogent matrix.

Table 4 shows an exemplary similarity matrix obtained from the exemplary product cogent matrix generated at step 216 of the method 200.

Table 4

|  | ['Furniture > Bedroom Furniture > Nightstands, ABCD Nightstand Antique Style - Rectangular - Warm Brown', | 'Furniture > Living Room Furniture > Tables > End Tables, XYZ Chairside End Table with USB ports and outlets Brown', | ... | 'Furniture > Bedroom Furniture > Nightstand, ABCD Nightstand', | .... |
|---|---|---|---|---|---|
| ['Furniture > Bedroom Furniture > Nightstands, ABCD Nightstand Antique Style - Rectangular - Warm Brown', | 1 | 0.35 | .. | 0.92 | ... |
| 'Furniture > Living Room Furniture > Tables > End Tables, XYZ Chairside End Table with USB ports and outlets Brown', | 0.26 | 1 | ... | 0.37 | ... |
| .... | ... | ... | ... | ... | ... |
| 'Furniture > Bedroom Furniture > Nightstand, ABCD Nightstand', | 0.92 | 0.41 | ... | 1 | ... |
| ...... | .... | .... | .... | ... |  |

At step 220 of the method 200, the one or more hardware processors 104 of the system 100 are configured to determine one or more target products that are closely matching (out of the plurality of target products received at step 202 of the method 200) for each source product of one or more source products received at step 202 of the method 200, using the similarity matrix obtained at step 218 of the method 200. The target product having the greater matrix value against the corresponding source product is considered as the close match. Note that the duplicates having the matrix value '1' for the same product are ignored during the matching. Also, possible that for one or some source products, the matching target products may not be available in the actual target products itself. If the matching target products may not be available in the actual target products itself, then the matrix value in the similarity matrix is represented with null value. In other words, the matrix value having '0' in the similarity matrix indicates that no matching target products are available in the actual target products.

The method and systems of the present disclosure ensures to identify the closely matching target products for each source product, so that the source retailer can compare and set the competitive price for each source product. The methods and systems of the present disclosure is simple yet accurate and effective to identify the closely matching target products based on specific product element such as product brand, product hierarchy, product variant, and so on. The methods and systems of the present disclosure make use of only text-based data inputs and hence need less resource utilization and also the configurations and infrastructure are scalable even for new products.

Table 5 shows the performance of the system 100 with the disclosed method 200, with the matching results of target products for some of the source products. If the exact product brand is not present in the target product, then the product name with suitable product hierarchy is considered for closely matching target products. Even if the same product hierarchy is not same of the target product, the present disclosure obtains the closely matching target products based on the brand name. The matching results shows that the present disclosure is accurate and efficient.

Table 5

| Source products | Target products |
| --- | --- |
| Sports & Outdoors > Outdoor<br><br>Recreation > Cycling > Car Racks, Transportation & Storage > Indoor Bike Storage, PQRS Counter Height Bar Stool Two-Tone (4 Pack) | Furniture > Sets > Dining Room Sets > Counter Height Dining Sets, GHI Dining Table and Bar Stools (Set of 3) |
| Home & Kitchen > Furniture > Living Room Furniture > Tables > Coffee Tables, ACD Rect Lift Top Cocktail Table White/Gray | Furniture > Living Room Furniture > Coffee Tables, MNO Coffee Table with Lift Top |
| Home & Kitchen > Furniture > Kitchen & Dining Room Furniture > Table & Chair Sets, PQRS<br><br>Upholstered Dining Room Chair Set of 2 Antique White & STU Dining Room Table Brown/Cottage White | Furniture > Kitchen & Dining Room Furniture > Dining Tables and Sets, STU Dining Table and 4 Chairs Set |
| Home & Kitchen > Furniture > Home Office Furniture > Home Office Desks, DEF Home Office Storage Leg Desk Medium Brown | Furniture > Home Office Furniture > Desks, DEF 60" Home Office Desk |

The embodiments of present disclosure herein address unresolved problem of the target product matching of the retail industry using only text-based data effectively without using any image-based data or labelled data. Hence the present disclosure and simple and scalable for any configuration and can be used for any type of the retail industry.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200) for text-based target products matching, the method comprising the steps of:

   receiving, via one or more hardware processors, (i) product details of each source product of one or more source products, and (ii) product details of each target product of a plurality of target products (202);

   generating, via the one or more hardware processors, (i) a source product corpus from the product details of each source product of the one or more source products, and (ii) a target product corpus from the product details of each target product of the plurality of target products (204);

   combining, via the one or more hardware processors, the source product corpus and the target product corpus, to obtain a combined product corpus, wherein the combined product corpus comprises a plurality of combined product corpus elements (206);

   obtaining, via the one or more hardware processors, a product corpus dictionary, from the combined product corpus, using a natural language processing technique, wherein the product corpus dictionary comprises a plurality of product context tokens (208);

   identifying, via the one or more hardware processors, one or more unique product context tokens out of the plurality of product context tokens (210);

   determining, via the one or more hardware processors, a token density of each unique product context token of the one or more unique product context tokens, using the product corpus dictionary (212);

   determining, via the one or more hardware processors, a cogent score for each unique product context token of the one or more unique product context tokens, using a cogent score calculation function (214);

   building, via the one or more hardware processors, a product cogent matrix having: (i) the plurality of combined product corpus elements of the combined product corpus, as rows, (ii) the one or more unique product context tokens, as columns, and (iii) the cogent score for each unique product context token of the one or more unique product context tokens, as matrix values (216);

   determining, via the one or more hardware processors, a similarity matrix using: (i) the product cogent matrix, and (ii) a transpose of the product cogent matrix (218); and

   determining, via the one or more hardware processors, one or more target products that are matching for each source product of one or more source products, using the similarity matrix (220).

2. The processor-implemented method of claim 1, wherein

   the product details of each source product comprise at least one of: a source product name, a source product brand, a source product price, a source product hierarchy, and source product variant details; and

   the product details of each target product comprise at least one of: a target product name, a target product brand, a target product price, a target product hierarchy, and target product variant details.

3. The processor-implemented method of claim 1, wherein generating the source product corpus from the product details of each source product of the one or more source products, comprises:

    obtaining one or more source product features for each source product, from the product details associated with each source product;
    combining the one or more source product features for each source product, to obtain an input source product feature vector for each source product; and
    combining the input source product feature vector for each source product of the one or more source products, to generate the source product corpus.

4. The processor-implemented method of claim 1, wherein generating the target product corpus from the product details of each target product of the plurality of target products, comprises:

    obtaining one or more target product features for each target product, from the product details associated with each target product;
    combining the one or more target product features for each target product, to obtain an input target product feature vector for each target product; and
    combining the input target product feature vector for each source product of the plurality of target products, to generate the target product corpus.

5. The processor-implemented method of claim 1, wherein obtaining the product corpus dictionary having the plurality of product context tokens, from the combined product corpus, using the natural language processing technique, comprises:

    extracting one or more product context tokens for each combined product corpus element of the plurality of combined product corpus elements, using the natural language processing technique;
    combining the one or more product context tokens for the plurality of combined product corpus elements, to obtain the plurality of product context tokens; and
    concatenating the plurality of product context tokens, to obtain the product corpus dictionary.

6. The processor-implemented method of claim 1, wherein the cogent score calculation function is made up of: (i) the token density of each unique product context token, and (ii) a number of the plurality of product context tokens present in the product corpus dictionary.

7. The processor-implemented method of claim 1, wherein the cogent score calculation function is mathematically expressed according to a relation:

$$Cogent\ score = 1 - \log(\frac{w(n)}{sc})$$

wherein w(n) is the token density of each unique product context token and sc is the number of the plurality of product context tokens present in the product corpus dictionary.

8. A system (100) for text-based target products matching, the system comprising:

    a memory (102) storing instructions;
    one or more Input/Output (I/O) interfaces (106); and
    one or more hardware processors (104) coupled to the memory (102) via the one or more I/O interfaces (106), wherein the one or more hardware processors (104) are configured by the instructions to:

        receive (i) product details of each source product of one or more source products, and (ii) product details of each target product of a plurality of target products;
        generate (i) a source product corpus from the product details of each source product of the one or more source products, and (ii) a target product corpus from the product details of each target product of the plurality of target products;
        combine the source product corpus and the target product corpus, to obtain a combined product corpus, wherein the combined product corpus comprises a plurality of combined product corpus elements;

obtain a product corpus dictionary from the combined product corpus, using a natural language processing technique, wherein the product corpus dictionary comprises a plurality of product context tokens;

identify one or more unique product context tokens out of the plurality of product context tokens;

determine a token density of each unique product context token of the one or more unique product context tokens, using the product corpus dictionary;

determine a cogent score for each unique product context token of the one or more unique product context tokens, using a cogent score calculation function;

build a product cogent matrix having: (i) the plurality of combined product corpus elements of the combined product corpus, as rows, (ii) the one or more unique product context tokens, as columns, and (iii) the cogent score for each unique product context token of the one or more unique product context tokens, as matrix values;

determine a similarity matrix using: (i) the product cogent matrix, and (ii) a transpose of the product cogent matrix; and

determine one or more target products that are matching for each source product of one or more source products, using the similarity matrix.

9. The system of claim 8, wherein

the product details of each source product comprise at least one of: a source product name, a source product brand, a source product price, a source product hierarchy, and source product variant details; and

the product details of each target product comprise at least one of: a target product name, a target product brand, a target product price, a target product hierarchy, and target product variant details.

10. The system of claim 8, wherein the one or more hardware processors (104) are configured to generate the source product corpus from the product details of each source product of the one or more source products, by:

obtaining one or more source product features for each source product, from the product details associated with each source product;

combining the one or more source product features for each source product, to obtain an input source product feature vector for each source product; and

combining the input source product feature vector for each source product of the one or more source products, to generate the source product corpus.

11. The system of claim 8, wherein the one or more hardware processors (104) are configured to generate the target product corpus from the product details of each target product of the plurality of target products, by:

obtaining one or more target product features for each target product, from the product details associated with each target product;

combining the one or more target product features for each target product, to obtain an input target product feature vector for each target product; and

combining the input target product feature vector for each source product of the plurality of target products, to generate the target product corpus.

12. The system of claim 8, wherein the one or more hardware processors (104) are configured to obtain the product corpus dictionary having the plurality of product context tokens, from the combined product corpus, using the natural language processing technique, by:

extracting one or more product context tokens for each combined product corpus element of the plurality of combined product corpus elements, using the natural language processing technique;

combining the one or more product context tokens for the plurality of combined product corpus elements, to obtain the plurality of product context tokens; and

concatenating the plurality of product context tokens, to obtain the product corpus dictionary.

13. The system of claim 8, wherein the cogent score calculation function is made up of: (i) the token density of each unique product context token, and (ii) a number of the plurality of product context tokens present in the product corpus dictionary.

14. The system of claim 8, wherein the cogent score calculation function is mathematically expressed according to a relation:

$$Cogent\ score = 1 - \log(\frac{w(n)}{sc})$$

wherein w(n) is the token density of each unique product context token and sc is the number of the plurality of product context tokens present in the product corpus dictionary.

15. One or more non-transitory machine-readable information storage mediums comprising one or more instructions which when executed by one or more hardware processors cause:

receiving, (i) product details of each source product of one or more source products, and (ii) product details of each target product of a plurality of target products;
generating, (i) a source product corpus from the product details of each source product of the one or more source products, and (ii) a target product corpus from the product details of each target product of the plurality of target products;
combining, the source product corpus and the target product corpus, to obtain a combined product corpus, wherein the combined product corpus comprises a plurality of combined product corpus elements;
obtaining, a product corpus dictionary, from the combined product corpus, using a natural language processing technique, wherein the product corpus dictionary comprises a plurality of product context tokens;
identifying, one or more unique product context tokens out of the plurality of product context tokens;
determining, a token density of each unique product context token of the one or more unique product context tokens, using the product corpus dictionary;
determining, a cogent score for each unique product context token of the one or more unique product context tokens, using a cogent score calculation function;
building, a product cogent matrix having: (i) the plurality of combined product corpus elements of the combined product corpus, as rows, (ii) the one or more unique product context tokens, as columns, and (iii) the cogent score for each unique product context token of the one or more unique product context tokens, as matrix values;
determining, a similarity matrix using: (i) the product cogent matrix, and (ii) a transpose of the product cogent matrix; and
determining, one or more target products that are matching for each source product of one or more source products, using the similarity matrix .

System **100**

**108**

Input
data

Memory **102**

Modules **102a**

Repository
**102b**

I/O interface(s)
**106**

Matching
results

Hardware
processor(s)
**104**

FIG. 1

200

Receive (i) product details of each source product of one or more source products, (ii) product details of each target product of a plurality of target products  202

Generate (i) a source product corpus from the product details of each source product of the one or more source products, and (ii) a target product corpus from the product details of each target product of the plurality of target products 204

Combine the source product corpus and the target product corpus, to obtain a combined product corpus, wherein the combined product corpus comprises a plurality of combined product corpus elements  206

Obtain a product corpus dictionary, from the combined product corpus, using a natural language processing technique, wherein the product corpus dictionary comprises a plurality of product context tokens 208

Identify one or more unique product context tokens out of the plurality of product context tokens 210

Determine a token density of each unique product context token of the one or more unique product context tokens, using the product corpus dictionary 212

A

FIG. 2A

A

Detemine a cogent score for each unique product context token of the one or more unique product context tokens, using a cogent score calculation function **214**

Build a product cogent matrix having: (i) the plurality of combined product corpus elements of the combined product corpus, as rows, (ii) the one or more unique product context tokens, as columns, and (iii) the cogent score for each unique product context token of the one or more unique product context tokens, as matrix values **216**

Determine a similarity matrix using: (i) the product cogent matrix, and (ii) a transpose of the product cogent matrix **218**

Determine one or more target products that are matching for each source product of one or more source products, using the similarity matrix **220**

FIG. 2B

Europäisches
Patentamt

European
Patent Office

Office européen
des brevets

# EUROPEAN SEARCH REPORT

**Application Number**

EP 23 15 4896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/398183 A1 (JAIN RAHUL [US] ET AL) 23 December 2021 (2021-12-23) <br> * paragraph [0003] * <br> * paragraph [0005] - paragraph [0006] * <br> * paragraph [0009] - paragraph [0011] * <br> * paragraph [0015] - paragraph [0017] * <br> * paragraph [0019] * <br> * paragraph [0044] * <br> * paragraph [0051] - paragraph [0052] * <br> * paragraph [0054] - paragraph [0055] * <br> * paragraph [0059] * <br> * paragraph [0068] - paragraph [0069] * <br> * paragraph [0071] - paragraph [0072] * <br> * paragraph [0074] * <br> * paragraph [0087] - paragraph [0088] * <br> * figures 1, 3, 5 * | 1-15 | INV. <br> G06Q30/0283 |
| Y | US 2015/331936 A1 (ALQADAH FARIS [US]) 19 November 2015 (2015-11-19) <br> * paragraph [0002] - paragraph [0003] * <br> * paragraph [0011] - paragraph [0014] * <br> * paragraph [0021] - paragraph [0023] * <br> * paragraph [0030] * <br> * paragraph [0053] * <br> * paragraph [0056] - paragraph [0058] * <br> * paragraph [0060] * <br> * paragraph [0066] * <br> * paragraph [0068] * <br> * paragraph [0083] * <br> * figures 4-6 * <br><br> -/-- | 1-15 | TECHNICAL FIELDS SEARCHED (IPC) <br><br> G06Q |

The present search report has been drawn up for all claims

| Place of search | Date of completion of the search | Examiner |
|---|---|---|
| Munich | 31 May 2023 | Bharucha, Zubin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 23 15 4896

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NASIR MAHREEN ET AL: "Improving e-commerce product recommendation using semantic context and sequential historical purchases", SOCIAL NETWORK ANALYSIS AND MINING, SPRINGER VIENNA, VIENNA, vol. 11, no. 1, 2 September 2021 (2021-09-02), XP037624946, ISSN: 1869-5450, DOI: 10.1007/S13278-021-00784-6 [retrieved on 2021-09-02] * abstract * * Section 1.2.1 * * Section 1.2.2 * * Section 1.3 * * Section 2.3 * * Section 3.1 * * Section 3.2(b) * * Example 3.3 * * Section 3.3 * * Section 3.3.1 * * figures 1, 9 * * tables 3, 6-8 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 31 May 2023 | Bharucha, Zubin |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
...........................................................................................
& : member of the same patent family, corresponding
  document

EPO FORM 1503 03.82 (P04C01)

page 2 of 2

**ANNEX TO THE EUROPEAN SEARCH REPORT
ON EUROPEAN PATENT APPLICATION NO.**

EP 23 15 4896

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2023

| Patent document cited in search report | | Publication date | Patent family member(s) | | Publication date |
|---|---|---|---|---|---|
| US 2021398183 | A1 | 23-12-2021 | US | 10949907 B1 | 16-03-2021 |
| | | | US | 2021398183 A1 | 23-12-2021 |
| | | | WO | 2021262530 A1 | 30-12-2021 |
| US 2015331936 | A1 | 19-11-2015 | NONE | | |

EPO FORM P0459

For more details about this annex : see Official Journal of the European Patent Office, No. 12/82

**EP 4 224 399 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202221006165